# EUROPÄISCHE PATENTSCHRIFT

(11) **EP 1 736 359 B1**
(45) Veröffentlichungstag und Bekanntmachung des Hinweises auf die Patenterteilung: **27.08.2008**
(21) Anmeldenummer: 06011442.8
(22) Anmeldetag: 02.06.2006
(51) Int. Cl.: B60Q 1/26, B60Q 1/44, H05B 33/08

(54) **Kraftfahrzeugbeleuchtung mittels Leuchtdioden**
Vehicle light using LEDs
Eclairage automobile à diodes

(30) Priorität: 23.06.2005 DE 102005029159
(43) Veröffentlichungstag der Anmeldung: 27.12.2006
(73) Patentinhaber: Dr. Ing. h.c. F. Porsche Aktiengesellschaft, 70435 Stuttgart (DE)
(72) Erfinder: Eberhardt, Stefan, 71522 Backnang (DE)

(56) Entgegenhaltungen:
- EP-A- 0 611 679
- EP-A- 1 659 028
- EP-A2- 1 594 346
- DE-A1- 10 313 337
- DE-A1- 19 923 187
- DE-U1-0202004 010 95
- US-A1- 2003 234 621

## Beschreibung

Die Erfindung betrifft eine Kraftfahrzeugbeleuchtung mittels Leuchtdioden, wie sie beispielsweise bereits aus der DE 201 15 775 U1 bekannt ist. In dieser Druckschrift wird ausgeführt, dass vorzugsweise der Frontscheinwerfer, welcher in vielen Ländern aus Dauerlicht betrieben wird, aus Leuchtdioden aufzubauen ist. Solche Scheinwerfer leuchten heller als die herkömmlichen und zeichnen sich durch eine längere Lebensdauer und einen geringen Stromverbrauch aus. Des weiteren sind sie erschütterungsunempfindlich und haben eine höhere Sicherheit durch ihre extreme Helligkeit.

Die Leuchtdioden zeichnen sich gegenüber den herkömmlichen Glühlampenleuchten durch eine wesentlich kürzere Ein- und Ausschaltzeit aus, während Glühlampenleuchten ein vergleichsweise träges Verhalten aufweisen.

Aus der DE 103 13 337 A1 ist ein Verfahren zum Ansteuern eines aus Leuchtdioden aufgebauten Leuchtmittels in einem Fahrzeug bekannt, wobei die Dynamik des Ein- und Ausschaltprozesses der Leuchtdioden der thermischen Trägheit einer Glühbirne nachempfunden ist weiterhin ist aus dem vor angemeldeten und nach veröffentlichten Druckschriff EP-A-594346

eine Blinkleuchte bekannt, deren Einschelt-und Ansucheltverhalten von der Fahrzeug--geschwindigkeit abhängig ist.

Die geringen Ein- und Ausschaltrampen für Leuchtdioden können unter bestimmten Bedingungen, wie beispielsweise geringe Umgebungshelligkeit, bei einem geringen Fahrzeugabstand oder bei einer häufigen Betätigung von anderen Verkehrsteilnehmer als störend empfunden werden.

Mit der erfindungsgemäßen Kraftfahrzeugbeleuchtung mittels Leuchtdioden sind die verschiedenen Beleuchtungsfunktionen am Kraftfahrzeug mit unterschiedlichen Ein- und Ausschaltrampen versehen. Dadurch ist je nach Einsatz und Informationsgehalt der jeweiligen Leuchten den anderen Verkehrsteilnehmern ggf. eine Gefahrensituation früher zu signalisieren. Bei der erfindungsgemäßen Kraftfahrzeugbeleuchtung und Schaltung der Kraftfahrzeugbeleuchtung wird je nachdem, welche Beleuchtung angesteuert wird, die für diese Leuchte und/oder Funktion optimale Ein- und Ausschaltrampe hinterlegt und zum Ein- bzw. Ausschalten die Leuchte über diese Ein- und/oder Ausschaltrampe entsprechend angefahren.

Die Ein- und Ausschaltzeit wird über verschiedene Schaltrampen realisiert, wobei eine kurze Schaltrampe eine sehr kurze Schaltzeit und damit ein hartes Ein- bzw. Ausschaltverhalten darstellt. Dagegen bewirken lange Schaltrampen eine lange Schaltzeit und damit ein weicheres Schaltverhalten.

So wird beispielsweise die Funktion des Blinklichtes über ein weiches Ein- und Ausschalten angesteuert, welches zusätzlich an das Umgebungslicht angepasst ist.

Bei Umschaltung der Blinklichtanlage durch Aktivierung der Warnblinkfunktion wird auf kurze Ein- und Ausschaltrampen umgeschaltet, so dass kurze Einschaltzeiten realisiert werden, was für den nachfolgenden Verkehr zu erhöhter Aufmerksamkeit führt.

Das Rücklicht eines Kraftfahrzeuges kann durch eine entsprechende Ansteuerung der Leuchtdioden an die Umgebungshelligkeit angepasst werden. Die Ein- und Ausschaltrampen sind hier nebensächlich, da das Rücklicht eine Dauerbeleuchtung aufweist.

Demgegenüber ist das Bremslicht so ausgeführt, dass bei geringer Geschwindigkeit ein weiches Ein- und Ausschalten realisiert ist, während bei hohen Geschwindigkeiten oder bei einer Notbremsung über eine kurze Einschaltrampe sofort die maximale Helligkeit geschaltet wird.

Die unterschiedliche Ansteuerung der Ein- und Ausschaltfunktion der verschiedenen Leuchten, die mittels einer Leuchtdiode an einem Kraftfahrzeug realisiert sind, bewirkt die Realisierung einer höheren Aufmerksamkeit der anderen Verkehrsteilnehmer, wenn dies erforderlich ist und gewährleisten gleichzeitig keine unnötig störende empfundene Beleuchtung, wenn das Fahrzeug in einem sogenannten Normalbetrieb bewegt wird.

## Patentansprüche

1. Kraftfahrzeugbeleuchtung mittels Leuchtdioden, die für die gesamte von außen erkennbare Beleuchtung eines Kraftfahrzeuges einsetzbar sind, wobei mit den Leuchtdioden verschiedene Beleuchtungsfunktionen am Fahrzeug realisiert sind und wobei je nachdem, welche Beleuchtung angesteuert wird, die für diese Leuchte und/oder für diese Funktion optimale Ein- und Ausschaltrampe hinterlegt ist, wobei die Leuchten jeweils mittels verschiedener Ein- und Ausschaltrampen schaltbar sind, wobei eine kurze Schaltrampe eine sehr kurze Schaltzeit und damit ein hartes Ein- bzw. Ausschalten der Leuchte bewirkt und wobei eine lange Schaltrampe eine lange Schaltzeit und damit ein weiches Schaltverhalten realisiert und wobei die verschiedenen Schaltrampen in Abhängigkeit des Umbebungslichtes, des Fahrzeugabstandes zu anderen Verkehrsteilnehmern und/oder der Funktionalität der entsprechenden Leuchte festgelegt sind.

2. Kraftfahrzeugbeleuchtung nach Anspruch 1, **dadurch gekennzeichnet, dass** die eine Blinkleuchten eine weiche Ein- und Ausschaltfunktion haben.

3. Kraftfahrzeugbeleuchtung nach Anspruch 1, **dadurch gekennzeichnet, dass** das Warnblinklicht über kurze Ein- und Ausschalfunktion geschaltet ist.

4. Kraftfahrzeugbeleuchtung nach einem der vorherigen Ansprüche, **dadurch gekennzeichnet, dass** das Rücklicht an die Umgebungshelligkeit angepasst ist.

5. Kraftfahrzeugbeleuchtung nach einem der vorherigen Ansprüche, **dadurch gekennzeichnet, dass** das Bremslicht unterhalb einer vorgebbaren Referenzgeschwindigkeit eine weiche Ein- und Ausschaltfunktion hat.

6. Kraftfahrzeugbeleuchtung nach einem der vorherigen Ansprüche, **dadurch gekennzeichnet, dass** bei Aktivierung einer Notbremsung das Bremslicht hart geschaltet ist.

## Claims

1. Motor vehicle lighting by means of light-emitting diodes which can be used for all the externally detectable lighting of a motor vehicle, the light-emitting diodes implementing various lighting functions on the vehicle and, depending on which lighting is driven, the switching-on and switching-off ramp that is optimum for this light and/or for this function being stored, the lights respectively being switchable by means of various switching-on and switching-off ramps a short switching ramp effecting a very short switching time, and thus a hard switching on or hard switching off of the light, and a long switching ramp implementing a long switching time, and thus a soft switching behaviour, and the various switching ramps being specified as a function of the ambient light, the vehicle distance in relation to other traffic users and/or the functionality of the corresponding light.

2. Motor vehicle lighting according to Claim 1, **characterized in that** some of the indicator lights have a soft switching-on and switching-off function.

3. Motor vehicle lighting according to Claim 1, **characterized in that** the hazard warning light is switched via a short switching-on and switching-off function.

4. Motor vehicle lighting according to one of the preceding claims, **characterized in that** the rear light is adapted to the ambient brightness.

5. Motor vehicle lighting according to one of the preceding claims, **characterized in that** the brake light has a soft switching-on and switching-off function below a prescribable reference speed.

6. Motor vehicle lighting according to one of the preceding claims, **characterized in that** the brake light is switched hard upon activation of emergency braking.

## Revendications

1. Éclairage de véhicule automobile au moyen de diodes électroluminescentes qui peuvent être utilisées pour la totalité de l'éclairage d'un véhicule automobile reconnaissable depuis l'extérieur, différentes fonctions d'éclairage étant réalisées sur le véhicule avec les diodes électroluminescentes et une rampe de mise en marche et d'arrêt optimale pour cette lampe et/ou pour cette fonction étant mémorisée en fonction de l'éclairage qui est commandé, les lampes pouvant être respectivement commutées au moyen de différentes rampes de mise en marche et d'arrêt, une rampe de commutation courte produisant un temps de commutation très court et ainsi une mise en marche ou un arrêt brutal de la lampe et une rampe de commutation longue réalisant un temps de commutation long et ainsi une commutation en douceur et les différentes rampes de commutation étant définies en fonction de la luminosité ambiante, de la distance entre le véhicule et les autres usagers du trafic et/ou de la fonctionnalité de la lampe correspondante.

2. Éclairage de véhicule automobile selon la revendication 1, **caractérisé en ce que** les feux clignotants ont une fonction de mise en marche et d'arrêt en douceur.

3. Éclairage de véhicule automobile selon la revendication 1, **caractérisé en ce que** le feu de détresse est commuté par le biais d'une fonction de mise en marche et d'arrêt courte.

4. Éclairage de véhicule automobile selon l'une des revendications précédentes, **caractérisé en ce que** le feu arrière est adapté à la luminosité ambiante.

5. Éclairage de véhicule automobile selon l'une des revendications précédentes, **caractérisé en ce que** le feu stop, au-dessous d'une vitesse de référence pouvant être prédéfinie, a une fonction de mise en marche et d'arrêt en douceur.

6. Éclairage de véhicule automobile selon l'une des revendications précédentes, **caractérisé en ce que,** lors de l'activation d'un freinage d'urgence, le feu stop est commuté brutalement.
